# EUROPEAN PATENT APPLICATION

(11) **EP 4 124 124 A1**
(43) Date of publication of application: **25.01.2023**
(21) Application number: 21792020.6
(22) Date of filing: 22.02.2021
(51) Int. Cl.: H04W 52/02

(54) **SLEEP AND WAKEUP METHOD FOR DATA INTERFACE, AND RELATED APPARATUS AND SYSTEM**

(30) Priority: 21.04.2020 CN 202010319077
(71) Applicant: Huawei Technologies Co., Ltd., Shenzhen, Guangdong 518129 (CN)
(72) Inventor: WANG, Kejian, Shenzhen, Guangdong 518129 (CN); CHEN, Yongwei, Shenzhen, Guangdong 518129 (CN); PAN, Yinhai, Shenzhen, Guangdong 518129 (CN); LI, Yongyao, Shenzhen, Guangdong 518129 (CN); FAN, Maobin, Shenzhen, Guangdong 518129 (CN)
(74) Representative: Körber, Martin Hans
(86) International application number: PCT/CN2021/077149
(87) International publication number: WO 2021/212988

(57) **Abstract**

This application provides a data interface sleep and wakeup method, a related apparatus, and a related system. The method includes: receiving data information sent by a second electronic device, where the data information includes sleep information; and setting at least one data interface to a sleep state based on the sleep information; or setting at least one data interface to a wakeup state based on the sleep information. When embodiments of this application are implemented, an electronic device can implement sleep and wakeup for a data interface based on received data information, to reduce redundancy of implementing sleep and wakeup for the electronic device, thereby improving efficiency and flexibility of implementing sleep and wakeup for the data interface.

## Description

This application claims priority to Chinese Patent Application No. 202010319077.0, filed with the China National Intellectual Property Administration on April 21, 2020 and entitled "DATA INTERFACE SLEEP AND WAKEUP METHOD, RELATED APPARATUS, AND SYSTEM", which is incorporated herein by reference in its entirety.

### TECHNICAL FIELD

This application relates to the field of communication technologies, and in particular, to a data interface sleep and wakeup method, a related apparatus, and a system.

### BACKGROUND

With development of electronic technologies, greater data needs to be transmitted between electronic devices. Therefore, a higher performance requirement is imposed on a data interface of the electronic device. However, power consumption of the data interface increases with performance improvement. Therefore, more vendors set an automatic sleep function for the data interface of the electronic device. Currently, the vendors dispose a detection unit in the electronic device. When the detection unit detects that the data interface has no data to be transmitted, the detection unit controls the data interface to sleep. However, in a process of using this method, although the data interface is in a sleep state, the detection unit is still in a work state, causing specific power consumption. In addition, it is difficult to ensure reliability of the detection unit.

### SUMMARY

This application provides a data interface sleep and wakeup method, and an apparatus, to reduce redundancy of implementing sleep and wakeup for a data interface of an electronic device, thereby improving efficiency and flexibility of sleep and wakeup for the data interface.

According to a first aspect, this application provides a data interface sleep and wakeup method. The method is applied to a first electronic device and includes: receiving data information sent by a second electronic device, where the data information includes sleep information; and setting at least one data interface to a sleep state based on the sleep information; or setting at least one data interface to a wakeup state based on the sleep information.

It may be learned that, in the foregoing technical solution, the first electronic device may implement sleep and wakeup for the at least one data interface based on the sleep information sent by the second electronic device. In other words, the first electronic device may implement control on states of a plurality of data interfaces based on one piece of sleep information instead of a plurality of pieces of sleep information and/or wakeup information, to avoid redundancy and time consumption caused during control on the data interfaces by using the plurality of pieces of sleep information and/or wakeup information, thereby improving state switching efficiency of the data interfaces. In addition, the foregoing technical solution does not require adjustment on a hardware structure, thereby improving sleep control reliability.

In a possible implementation, the sleep information includes a first sleep level, and the setting at least one data interface to a sleep state based on the sleep information includes: setting the sleep state of the at least one data interface based on the first sleep level.

Setting the sleep state of the at least one data interface based on the first sleep level is to enable the first electronic device to be in the sleep state at the first sleep level.

The first electronic device and the second electronic device may store a standard protocol of the data interface. The standard protocol defines a specific state of the data interface of the electronic device when the data interface is at different sleep levels.

It may be learned that, in the foregoing technical solution, the sleep information includes the first sleep level, so that the first electronic device can set the data interface based on the first sleep level to adapt to requirements in different scenarios, thereby improving flexibility of setting the sleep state.

In a possible implementation, the sleep information includes at least one sleep level, and the setting at least one data interface to a sleep state based on the sleep information includes: determining, based on the at least one sleep level, a sleep level corresponding to each data interface in the at least one data interface; and setting a sleep state of each data interface based on the sleep level corresponding to each data interface.

It may be learned that, in the foregoing technical solution, the sleep information may include a plurality of sleep levels, and the electronic device may set the plurality of data interfaces to be in the sleep states at different levels based on the plurality of sleep levels, to implement differentiated configuration and meet requirements in different scenarios, thereby improving flexibility of setting the sleep state.

In a possible implementation, the sleep information further includes a first time window, and the setting at least one data interface to a wakeup state based on the sleep information includes: determining a target time point based on the first time window; and setting the at least one data interface to the wakeup state at the target time point.

It may be learned that, in the foregoing technical solution, the sleep information includes the time window, and the first electronic device may determine the target time point based on the time window, to implement wakeup for the at least one data interface at the target time. The first electronic device can implement wakeup for the at least one data interface without receiving the wakeup information from the second electronic device, to reduce information transmission between the first electronic device and the second electronic device, thereby improving efficiency of switching from the sleep state to the wakeup state.

In a possible implementation, the sleep information includes at least one time window, and the setting at least one data interface to a wakeup state based on the sleep information includes: determining, based on the at least one time window, a target time point corresponding to each data interface in the at least one data interface; and setting each data interface to the wakeup state at the target time point corresponding to each data interface.

It may be learned that, in the foregoing technical solution, the sleep information may include a plurality of time windows, and the first electronic device may further determine, based on the plurality of time windows, the target time point corresponding to each of the plurality of data interfaces, to implement switching from the sleep state to the wakeup state at the target time point corresponding to each data interface, thereby implementing differentiated management on different data interfaces, meeting use requirements in different scenarios, and improving flexibility of switching a state of the at least one data interface from the sleep state to the wakeup state by the first electronic device.

In a possible implementation, the sleep information further includes at least one interface number, and before the setting at least one data interface to a sleep state based on the sleep information, the method includes: determining the at least one data interface based on the at least one interface number.

It may be learned that, in the foregoing technical solution, the sleep information includes the interface number. In this way, the first electronic device can determine the at least one data interface from all data interfaces of the first electronic device based on the at least one interface number, and further set the at least one data interface to the sleep state, to improve flexibility of setting the data interface to the sleep state, thereby meeting requirements in different data transmission scenarios.

In a possible implementation, a quantity of the at least one sleep level is the same as a quantity of the at least one data interface, and the determining, based on the at least one sleep level, a sleep level corresponding to each data interface in the at least one data interface includes: determining a first correspondence between each interface number in the at least one interface number and each data interface; determining a second correspondence between each interface number and each sleep level in the at least one sleep level; and determining, based on the first correspondence and the second correspondence, the sleep level corresponding to each data interface.

It may be learned that, in the foregoing technical solution, the first electronic device may determine a correspondence between each data interface and each sleep level based on the correspondence between an interface number and a data interface and the correspondence between an interface number and a sleep level, to further facilitate the first electronic device in setting the sleep level corresponding to each data interface.

In a possible implementation, a quantity of the at least one time window is the same as the quantity of the at least one data interface, and the determining, based on the at least one time window, a target time point corresponding to each data interface in the at least one data interface includes: determining a third correspondence between each interface number in the at least one interface number and each data interface; determining a fourth correspondence between each interface number and each time window in the at least one time window; determining, based on the third correspondence and the fourth correspondence, a time window corresponding to each data interface; and determining, based on the time window corresponding to each data interface, the target time point corresponding to each data interface.

It may be learned that, in the foregoing technical solution, the first electronic device may determine a correspondence between a data interface and a time window based on the correspondence between an interface number and a data interface and the correspondence between an interface number and a time window, and further determine the target time point corresponding to each data interface, to facilitate switching each data interface from the sleep state to the wakeup state by the first electronic device.

In a possible implementation, the data information further includes valid transmission information, and the valid transmission information and the sleep information are in the same data packet.

It may be learned that, in the foregoing technical solution, the valid transmission information and the sleep information are in the same data packet. In this case, the first electronic device does not need to independently receive the sleep information in a switching process between the sleep state and the wakeup state, thereby improving efficiency of setting the sleep state and the wakeup state by the first electronic device.

According to a second aspect, an embodiment of this application provides a data transmission system. The system includes a first electronic device and a second electronic device. The second electronic device is configured to send data information to the first electronic device. The data information includes sleep information. The first electronic device is configured to: receive the data information sent by the second electronic device; and set at least one data interface to a sleep state based on the sleep information; or set at least one data interface to a wakeup state based on the sleep information.

It may be learned that, in the foregoing technical solution, the second electronic device may send the data information carrying the sleep information to the first electronic device, so that the first electronic device implements sleep and wakeup for the at least one data interface based on the sleep information. In other words, the first electronic device may implement control on states of a plurality of data interfaces based on one piece of sleep information instead of a plurality of pieces of sleep information and/or wakeup information, to avoid redundancy and time consumption caused during control on the data interfaces by using the plurality of pieces of sleep information and/or wakeup information, thereby improving state switching efficiency of the data interfaces. In addition, the foregoing technical solution does not require adjustment on a hardware structure, thereby improving sleep control reliability.

According to a third aspect, an embodiment of this application provides an electronic device. The electronic device includes: a transceiver unit, configured to receive data information sent by a second electronic device, where the data information includes sleep information; and a processing unit, configured to: set at least one data interface to a sleep state based on the sleep information; or set at least one data interface to a wakeup state based on the sleep information.

In a possible implementation, the sleep information includes a first sleep level, and when the processing unit is configured to set the at least one data interface to the sleep state based on the sleep information, the processing unit is specifically configured to set the sleep state of the at least one data interface based on the first sleep level.

In a possible implementation, the sleep information includes at least one sleep level, and when the processing unit is configured to set the at least one data interface to the sleep state based on the sleep information, the processing unit is specifically configured to: determine, based on the at least one sleep level, a sleep level corresponding to each data interface in the at least one data interface; and set the sleep state of each data interface based on the sleep level corresponding to each data interface.

In a possible implementation, the sleep information further includes a first time window, and when the processing unit is configured to set the at least one data interface to the wakeup state based on the sleep information, the processing unit is specifically configured to: determine a target time point based on the first time window; and set the at least one data interface to the wakeup state at the target time point.

In a possible implementation, the sleep information includes at least one time window, and when the processing unit is configured to set the at least one data interface to the wakeup state based on the sleep information, the processing unit is specifically configured to: determine, based on the at least one time window, a target time point corresponding to each data interface in the at least one data interface; and set each data interface to the wakeup state at the target time point corresponding to each data interface.

In a possible implementation, the sleep information further includes at least one interface number, and before the processing unit is configured to set the at least one data interface to the sleep state based on the sleep information, the processing unit is specifically configured to determine the at least one data interface based on the at least one interface number.

In a possible implementation, a quantity of the at least one sleep level is the same as a quantity of the at least one data interface, and when the processing unit is configured to determine, based on the at least one sleep level, a sleep level corresponding to each data interface in the at least one data interface, the processing unit is specifically configured to: determine a first correspondence between each interface number in the at least one interface number and each data interface; determine a second correspondence between each interface number and each sleep level in the at least one sleep level; and determine, based on the first correspondence and the second correspondence, the sleep level corresponding to each data interface.

In a possible implementation, a quantity of the at least one time window is the same as the quantity of the at least one data interface, and when the processing unit is configured to determine, based on the at least one time window, the target time point corresponding to each data interface in the at least one data interface, the processing unit is specifically configured to: determine a third correspondence between each interface number in the at least one interface number and each data interface; determine a fourth correspondence between each interface number and each time window in the at least one time window; determine, based on the third correspondence and the fourth correspondence, a time window corresponding to each data interface; and determine, based on the time window corresponding to each data interface, the target time point corresponding to each data interface.

In a possible implementation, the data information further includes valid transmission information, and the valid transmission information and the sleep information are in the same data packet.

According to a fourth aspect, an embodiment of this application provides a data interface sleep and wakeup method. The method is applied to a second electronic device and includes: sending data information to a first electronic device, where the data information includes sleep information, and the sleep information is used by the first electronic device to set at least one data interface to a sleep state, or the sleep information is used by the first electronic device to set at least one data interface to a wakeup state.

According to a fifth aspect, an embodiment of this application provides an electronic device. The electronic device includes a processor, a memory, and a data interface. The data interface is configured to receive and/or send data information, the memory stores one or more computer programs, and the processor invokes the computer programs stored in the memory to implement the method according to any implementation of the first aspect or the fourth aspect.

According to a sixth aspect, an embodiment of this application provides a computer-readable storage medium. The computer-readable storage medium stores a computer program. When the computer program is run, the method according to any implementation of the first aspect or the fourth aspect is implemented.

### BRIEF DESCRIPTION OF DRAWINGS

The following briefly describes the accompanying drawings required for describing embodiments or the prior art.
Where:
FIG. 1 is an architectural diagram of a data transmission system according to an embodiment of this application;
FIG. 2 is a schematic diagram of a data interface sleep and wakeup method according to an embodiment of this application;
FIG. 3 is a schematic diagram of a possible data transmission architecture according to an embodiment of this application;
FIG. 4 is a schematic diagram of a structure of a data link layer in the data transmission architecture shown in FIG. 3;
FIG. 5 is a schematic diagram of another possible data transmission architecture according to an embodiment of this application;
FIG. 6 is a schematic diagram of a structure of a data link layer in the data transmission architecture shown in FIG. 5;
FIG. 7 is a schematic diagram of another possible data transmission architecture according to an embodiment of this application;
FIG. 8 is a schematic diagram of a structure of a data link layer in the data transmission architecture shown in FIG. 7;
FIG. 9 is a schematic diagram of a possible combination of valid transmission information and sleep information according to an embodiment of this application;
FIG. 10 is a schematic diagram of a structure of an electronic device according to an embodiment of this application; and
FIG. 11 is a schematic diagram of a structure of another electronic device according to an embodiment of this application.

### DESCRIPTION OF EMBODIMENTS

The following describes the technical solutions in embodiments of this application with reference to the accompanying drawings in embodiments of this application.

In the specification, claims, and accompanying drawings of this application, terms "first", "second", and the like are intended to distinguish between different objects but do not indicate a particular order.

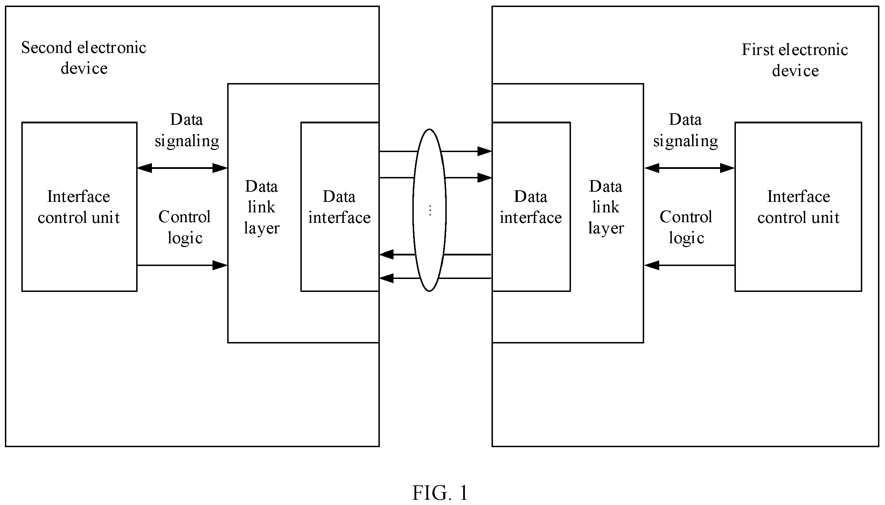

FIG. 1 is an architectural diagram of a data transmission system according to an embodiment of this application. As shown in FIG. 1, the data transmission system includes a first electronic device and a second electronic device. The first electronic device and the second electronic device each include a data link layer and an interface control unit. The data link layer includes a data interface. Data signaling may be transmitted between the data link layer and the interface control unit. In addition, the interface control unit may generate control logic, and send the control logic to the data link layer, to implement control on a state of the data interface in the data link layer. Specifically, the data interface of the first electronic device may receive data information that is sent by the data interface of the second electronic device and that includes the sleep information. The data link layer of the first electronic device analyzes the sleep information; generates, based on the sleep information, data signaling that is used to set the data interface to a sleep state; and sends the data signaling to the interface control unit. The interface control unit generates, based on the data signaling that is used to set the data interface to the sleep state, control logic that is used to set the data interface to the sleep state; and further sends the control logic to the data link layer, to control the data interface of the first electronic device to enter the sleep state. Then, the first electronic device may generate, based on the sleep information, data signaling that is used to set the data interface to a wakeup state, and send the data signaling to the interface control unit. The interface control unit generates, based on the data signaling that is used to set the data interface to the wakeup state, control logic that is used to set the data interface to the wakeup state; and further sends the control logic to the data link layer, to set the data interface of the first electronic device to the wakeup state.

It should be noted that the electronic device in this embodiment of this application may be a device that includes a wireless transmission/reception function and that may cooperate with an access network device to provide a communication service for a user. Specifically, the terminal device may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, or a terminal device in a future 5G network or a network after 5G. This is not limited in embodiments of this application.

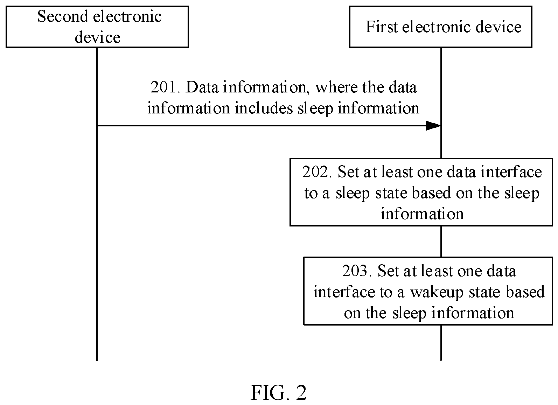

FIG. 2 is a schematic diagram of a data interface sleep and wakeup method according to an embodiment of this application. The method is applied to a first electronic device. As shown in FIG. 2, the method includes but is not limited to the following steps:

201. The first electronic device receives data information sent by a second electronic device, where the data information of the electronic device includes sleep information.

The data sleep information may further include valid transmission information. The valid transmission information is used for communication and interaction between the first electronic device and the second electronic device. The valid transmission information and the sleep information are combined in the same data information.

It may be learned that the valid transmission information and the sleep information are combined in the same data information, so that the second electronic device does not need to independently send corresponding sleep information when the second electronic device indicates the first electronic device to set a data interface to a sleep state. This reduces steps in information transmission, and improves efficiency of transmitting the sleep information between the first electronic device and the second electronic device.

202. The first electronic device sets at least one data interface to a sleep state based on the sleep information of the electronic device.

The data interface of the first electronic device includes a receiver (receiver, RX) port; or the data interface of the first electronic device includes a receiver (receiver, RX) port and a transmitter (transmitter, TX) port.

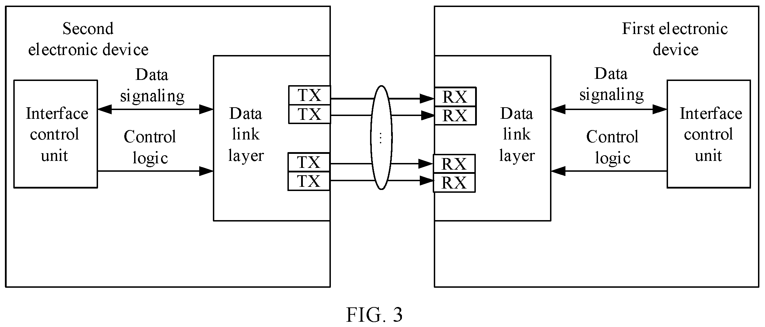

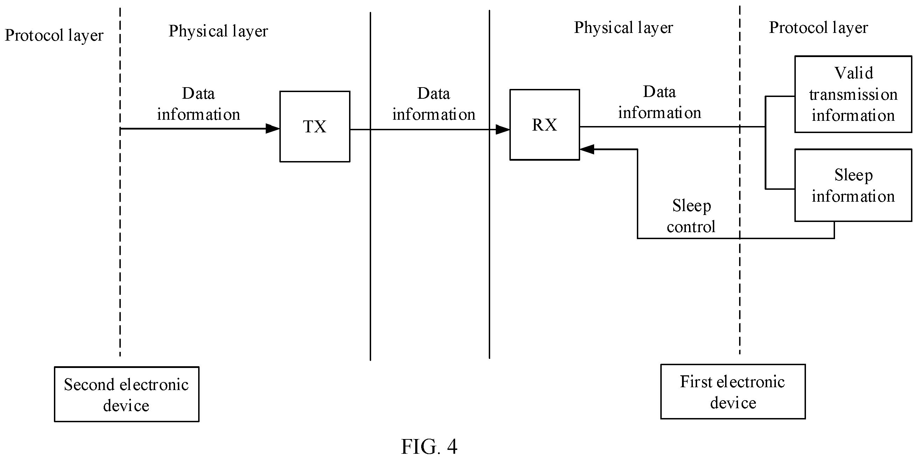

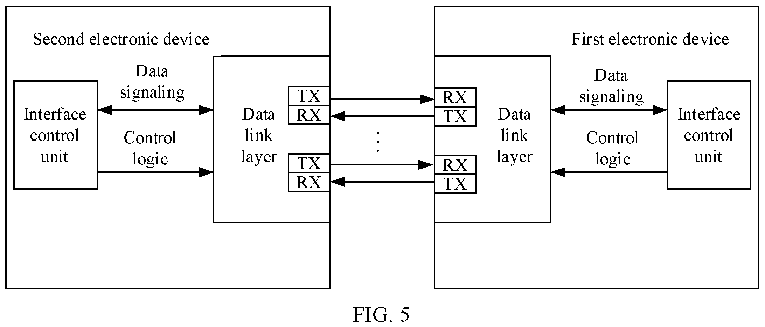

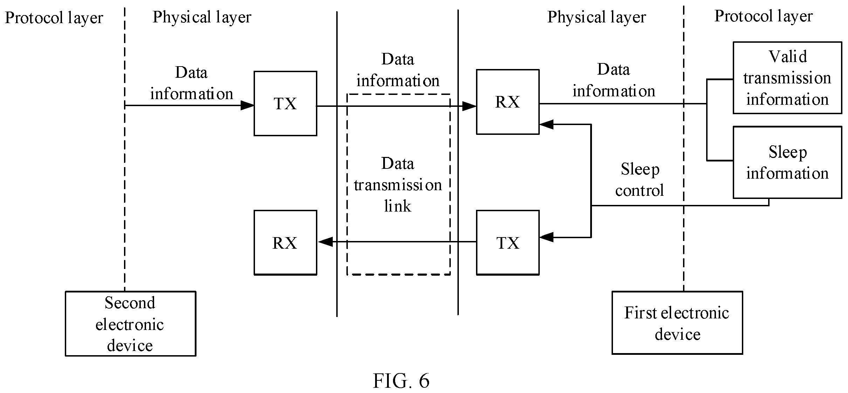

Optionally, FIG. 3 is a schematic diagram of a possible data transmission architecture according to an embodiment of this application. A first electronic device and a second electronic device each include an interface control unit and a data link layer. The data link layer of the first electronic device includes an RX. The data link layer of the second electronic device includes a TX. Between the first electronic device and the second electronic device, a data transmission link from the TX of the second electronic device to the RX of the first electronic device is formed. In other words, each data transmission link has only one transmission direction. The first electronic device may generate data signaling based on received data information, and then send the data signaling to the interface control unit. The interface control unit generates control logic based on the data signaling, and controls, based on the control logic, the RX to switch between a sleep state and a wakeup state. Specifically, FIG. 4 is a schematic diagram of a structure of the data link layer in the data transmission architecture shown in FIG. 3. The data link layer of the first electronic device and the data link layer of the second electronic device each include a physical layer and a protocol layer. The physical layer of the second electronic device includes the TX, and the physical layer of the first electronic device includes the RX. The physical layer of the second electronic device receives the data information sent by the protocol layer. The data information includes the valid transmission information and the sleep information. The TX of the second electronic device sends the data information to the RX of the first electronic device. The RX of the first electronic device receives the data information, and transmits the data information to the protocol layer. The protocol layer of the first electronic device splits the data information to obtain the valid transmission information and the sleep information. The first electronic device generates sleep control signaling based on the sleep information, and sets a state of at least one RX of the first electronic device to the sleep state based on the sleep control signaling. It should be noted that, in a specific implementation environment, a state of each RX of the first electronic device may be controlled by using sleep information sent by a TX on a data transmission link in which the RX is located. For example, the second electronic device includes a first TX, the first electronic device includes a first RX, and a first data transmission link is formed between the first TX and the first RX. In this case, a state of the first RX may be controlled by the first electronic device by using sleep information received on the first data transmission link. It should be noted that in FIG. 4, that the first electronic device includes one RX and the second electronic device includes one TX is used for reference descriptions. In a specific implementation environment, a quantity of RXs of the first electronic device and a quantity of TXs of the second electronic device may be adjusted according to an actual case. Optionally, FIG. 5 is a schematic diagram of another possible data transmission architecture according to an embodiment of this application. A first electronic device and a second electronic device each include an interface control unit and a data link layer. The data link layer of the first electronic device and the data link layer of the second electronic device each include an RX and a TX. Each data transmission link constituted by the first electronic device and the second electronic device has only two transmission directions. In other words, each data transmission link has a transmission direction from the first electronic device to the second electronic device and a transmission direction from the second electronic device to the first electronic device. The first electronic device may generate data signaling based on the received data information, and then send the data signaling to the interface control unit. The interface control unit generates control logic based on the data signaling, and controls, based on the control logic, the RX and the TX of the first electronic device to switch between the sleep state and the wakeup state. Specifically, FIG. 6 is a schematic structural diagram of a data link layer in the data transmission architecture shown in FIG. 5. The data link layer of the first electronic device and the data link layer of the second electronic device each include a physical layer and a protocol layer. The physical layer of the first electronic device and the physical layer of the second electronic device each include the TX and the RX. The physical layer of the second electronic device receives the data information sent by the protocol layer. The data information includes the valid transmission information and the sleep information. The second electronic device sends the data information to the RX of the first electronic device by using the TX. The RX of the first electronic device receives the data information, and transmits the data information to the protocol layer. The protocol layer of the first electronic device splits the data information to obtain the valid transmission information and the sleep information. The first electronic device generates sleep control signaling based on the sleep information, and sets states of the RX and the TX of the first electronic device to the sleep state based on the sleep control signaling. It should be noted that, in FIG. 6, that the first electronic device includes one TX and one RX and the second electronic device includes one TX is used for reference descriptions. In a specific implementation environment, a quantity of RX of the first electronic device and a quantity of TXs and a quantity of RXs of the second electronic device may be adjusted according to a specific case.

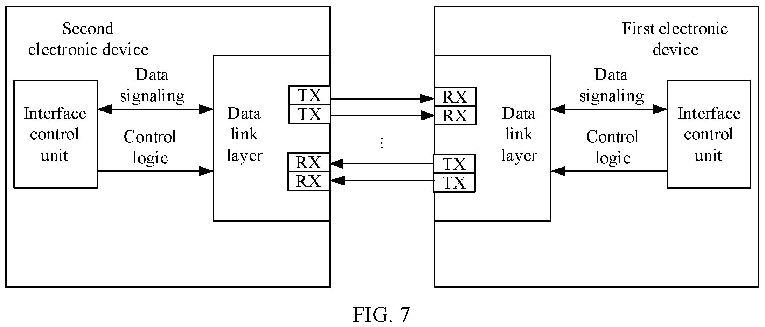

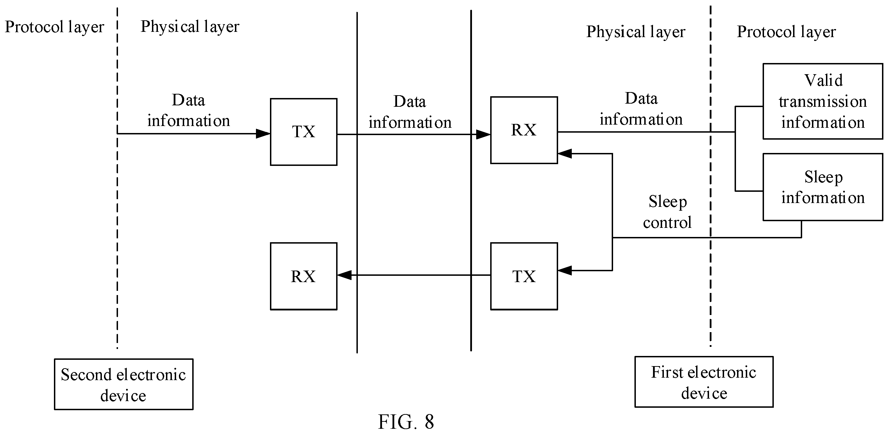

Optionally, FIG. 7 is a schematic diagram of another possible data transmission architecture according to an embodiment of this application. A first electronic device and a second electronic device each include an interface control unit and a data link layer. The data link layer of the first electronic device and the data link layer of the second electronic device each include an RX and a TX. Each data transmission link constituted by the first electronic device and the second electronic device has only one transmission direction. In other words, each data transmission link has a transmission direction from the first electronic device to the second electronic device or a transmission direction from the second electronic device to the first electronic device. The data transmission links constituted by the first electronic device and the second electronic device include data transmission links having the foregoing two directions. Specifically, between the first electronic device and the second electronic device, a plurality of data transmission links from the first electronic device to the second electronic device may be formed, and a plurality of data transmission links from the second electronic device to the first electronic device may be formed. The first electronic device may generate data signaling based on received data information, and then send the data signaling to the interface control unit. The interface control unit generates control logic based on the data signaling, and controls, based on the control logic, the RX and the TX to switch between a sleep state and a wakeup state. Specifically, FIG. 8 is a schematic diagram of a structure ofa data link layer in the data transmission architecture shown in FIG. 7. The data link layer of the first electronic device and the data link layer of the second electronic device each include a physical layer and a protocol layer. The physical layer of the first electronic device and the physical layer of the second electronic device each include the TX and the RX. The physical layer of the second electronic device receives the data information sent by the protocol layer. The data information includes the valid transmission information and the sleep information. The second electronic device sends the data information to the RX of the first electronic device by using the TX. The RX of the first electronic device receives the data information, and transmits the data information to the protocol layer. The protocol layer of the first electronic device splits the data information to obtain the valid transmission information and the sleep information. The first electronic device generates sleep control signaling based on the sleep information, and sets states of the RX and the TX of the first electronic device to the sleep state based on the sleep control signaling. It should be noted that, in FIG. 8, that the first electronic device includes one TX and one RX and the second electronic device includes one TX is used for reference descriptions. In a specific implementation environment, a quantity of RX of the first electronic device and a quantity of TXs and a quantity of RXs of the second electronic device may be adjusted according to a specific case.

203. The first electronic device sets at least one data interface of the electronic device to the wakeup state based on the sleep information of the electronic device.

The sleep information includes a wakeup condition for the at least one data interface. The first electronic device may be in the second electronic device based on the wakeup condition. Specifically, the wakeup condition may be a specified time point. Alternatively, the wakeup condition may be a time window. When the wakeup condition is a time window, the first electronic device may calculate a target time point based on the time window and a time point at which the data information is received, and further set the state of the at least one data interface to the wakeup state at the target time point.

It may be learned that, in the foregoing technical solution, the first electronic device may implement sleep and wakeup for the at least one data interface based on the sleep information sent by the second electronic device. In other words, the first electronic device may implement control on states of a plurality of data interfaces based on one piece of sleep information instead of a plurality of pieces of sleep information and/or wakeup information, to avoid redundancy and time consumption caused during control on the data interfaces by using the plurality of pieces of sleep information and/or wakeup information, thereby improving state switching efficiency of the data interfaces. In addition, the foregoing technical solution does not require adjustment on a hardware structure, thereby improving sleep control reliability.

In a possible implementation, the sleep information of the electronic device includes a first sleep level, and that the electronic device sets the at least one data interface to the sleep state based on the sleep information of the electronic device includes: setting the electronic device sleep state of the at least one data interface of the electronic device based on the first sleep level of the electronic device.

Setting the electronic device sleep state of the at least one data interface of the electronic device based on the first sleep level of the electronic device is to enable the electronic device: the first electronic device to be in the sleep state at the first sleep level of the electronic device.

The first electronic device and the second electronic device may store a standard protocol of the data interface. The standard protocol defines a specific state of the data interface of the electronic device when the data interface is at different sleep levels.

For example, the sleep level may include a first sleep level, a second sleep level, and a third sleep level. When the data interface is in the wakeup state, power consumption of the data interface is a first power value. When the data interface is in a sleep state at the first sleep level, power consumption of the data interface is 0, and the data interface is in a state in which no data is transmitted at all. When the data interface is at the second sleep level, power consumption of the data interface is a second power value, where the second power value is less than the first power value. When the data interface is at the third sleep level, power consumption of the data interface is a third power value, where the third power value is less than the second power value. Optionally, the electronic device may set different priorities for to-be-sent data. For example, a priority of data may be set to a first priority, a second priority, or a third priority. When the data interface is at the third sleep level, the data interface transmits only data with the first priority, and the power consumption of the data interface is the third power value. When the data interface is at the second sleep level, the data interface transmits data with the first priority and data with the second priority, and the power consumption of the data interface is the second power value. When the data interface is at the first sleep level, the data interface transmits data with all priorities, and the power consumption of the data interface is set to the first power value.

It may be learned that, in the foregoing technical solution, the sleep information includes the first sleep level, so that the first electronic device can set the data interface based on the first sleep level to adapt to requirements in different scenarios, thereby improving flexibility of setting the sleep state.

In a possible implementation, the sleep information of the electronic device includes at least one sleep level, and that the electronic device sets the at least one data interface to the sleep state based on the sleep information of the electronic device includes: determining, based on the at least one sleep level of the electronic device, a sleep level corresponding to each data interface in the at least one data interface of the electronic device; and setting an electronic device sleep state of each data interface of the electronic device based on the sleep level corresponding to each data interface of the electronic device.

The sleep information may include setting information for each data interface. The setting information may use at least one bit to indicate the sleep level. For example, Table 1 shows configuration of setting information of one data interface. The setting information includes one byte, that is, eight bits. Herein, number 0 to number 7 indicate the eight bits. A number 0 bit may be used to indicate an interface number. When a value of the number 0 bit is equal to 0, the value 0 may correspond to a first data interface; or when a value of the number 0 bit is equal to 1, the value 1 may correspond to a second data interface. A number 1 bit and a number 2 bit are used to indicate a sleep level. To be specific, four sleep levels: 00, 01, 10, and 11 may be obtained. Specifically, 00 may correspond to a first sleep level, 01 may correspond to a second sleep level, 10 may correspond to a third sleep level, and 11 may correspond to a fourth sleep level. A number 3 bit to a number 5 bit are used to indicate a sleep time window. Eight different sleep time windows may be set. A number 6 bit and a number 7 bit are used to indicate reserved bits. For example, a sleep level of a number 0 data interface is currently set to the first sleep level and the first sleep level is represented by using 00, and a time window is a first time window and the first time window is represented by using 111. Sleep information corresponding to the number 0 data interface is 00011100. Specifically, bit lengths corresponding to the interface number, the sleep level, and the time window may be adjusted according to a specific case. For example, when there are many data interfaces, the number 0 bit to the number 2 bit may be used to indicate the interface number. To be specific, the number 0 bit to the number 2 bit may be used to indicate eight data interfaces by using different values. The number 3 bit and the number 4 bit are used to specify the sleep level. The number 5 bit to the number 7 bit are used to specify the time window.

Optionally, one bit may be set in the sleep information to specify whether to sleep. In Table 1, the number 6 bit may be used to indicate whether to sleep. When the number 6 bit is equal to 0, it indicates that the data interface is not set to the sleep state. When the number 6 bit is equal to 1, it indicates that the data interface is set to the sleep state. Optionally, only a bit used for specifying the time window and a bit used for specifying whether to sleep may be reserved in the sleep information.

**Table 1**

| Bit | Values | Note |
|---|---|---|
| 0 | 0/1 | Specify an interface number |
| 2:1 | 00-11 | Specify a sleep level, where four levels: 00, 01, 10 and 11 are supported |
| 5:3 | 000-111 | Specify a time window |
| 7:6 | 00 | Reserved bit |

It may be learned that, in the foregoing technical solution, the sleep information may include a plurality of sleep levels, and the electronic device may set the plurality of data interfaces to be in the sleep states at different levels based on the plurality of sleep levels, to implement differentiated configuration and meet requirements in different scenarios, thereby improving flexibility of setting the sleep state.

In a possible implementation, the sleep information of the electronic device further includes a first time window, and that the electronic device sets the at least one data interface of the electronic device to the wakeup state based on the sleep information of the electronic device includes: determining a target time point based on the first time window of the electronic device; and setting the at least one data interface of the electronic device to the wakeup state at the target time point of the electronic device.

The first electronic device may obtain a first time point at which the data information is received, obtain the target time point through calculation based on the first time point and the first time window, and set a state of the data interface to the wakeup state at the target time point.

It may be learned that, in the foregoing technical solution, the sleep information includes the time window, and the first electronic device may determine the target time point based on the time window, to implement wakeup for the at least one data interface at the target time. The first electronic device can implement wakeup for the at least one data interface without receiving the wakeup information from the second electronic device, to reduce information transmission between the first electronic device and the second electronic device, thereby improving efficiency of switching from the sleep state to the wakeup state.

In a possible implementation, the sleep information of the electronic device includes at least one time window, and that the electronic device sets the at least one data interface of the electronic device to the wakeup state based on the sleep information of the electronic device includes: determining, based on the at least one time window of the electronic device, a target time point corresponding to each data interface in the at least one data interface; and setting each data interface of the electronic device to the wakeup state at the target time point corresponding to each data interface of the electronic device.

With reference to Table 1, the sleep information may include setting information corresponding to each data interface. The setting information may include a time window corresponding to each data interface. The electronic device may obtain the first time point at which the data information is received. The electronic device obtains, through calculation based on the first time point and the time window corresponding to each data interface, the target time point corresponding to each data interface.

Optionally, based on the sleep information, the at least one data interface included in the sleep information may be allocated to a first quantity of sets. The first quantity is less than or equal to a quantity of the at least one data interface. The sleep information includes a time window corresponding to each set. In other words, the sleep information includes at least one time window. The time window corresponding to each data interface is determined based on a set to which each data interface in the at least one data interface belongs. Further, the target time point corresponding to each data interface is obtained through calculation.

It may be learned that, in the foregoing technical solution, the sleep information may include a plurality of time windows, and the first electronic device may determine, based on the plurality of time windows, the target time point corresponding to each of the plurality of data interfaces, to implement switching from the sleep state to the wakeup state at the target time point corresponding to each data interface, thereby implementing differentiated management on different data interfaces, meeting use requirements in different scenarios, and improving flexibility of switching a state of the at least one data interface from the sleep state to the wakeup state by the first electronic device.

In a possible implementation, the sleep information of the electronic device further includes at least one interface number, and before the electronic device sets the at least one data interface to the sleep state based on the sleep information of the electronic device, the method further includes: determining the at least one data interface of the electronic device based on the at least one interface number of the electronic device.

Specifically, with reference to Table 1, the sleep information may include the interface number, and the first electronic device screens out the at least one data interface from all the data interfaces based on the interface number.

It may be learned that, in the foregoing technical solution, the sleep information includes the interface number. In this way, the first electronic device can determine the at least one data interface from all data interfaces of the first electronic device based on the at least one interface number, and further set the at least one data interface to the sleep state, to improve flexibility of setting the data interface to the sleep state, thereby meeting requirements in different data transmission scenarios.

In a possible implementation, a quantity of the at least one sleep level of the electronic device is the same as a quantity of the at least one data interface of the electronic device, and that the electronic device determines, based on the at least one sleep level of the electronic device, the sleep level corresponding to each data interface in the at least one data interface of the electronic device includes: determining a first correspondence between each interface number in the at least one interface number of the electronic device and each data interface of the electronic device; determining a second correspondence between each interface number of the electronic device and each sleep level in the at least one sleep level of the electronic device; and determining, based on the first correspondence of the electronic device and the second correspondence of the electronic device, the sleep level corresponding to each data interface of the electronic device.

Specifically, Table 1 shows the interface number. The first electronic device stores the correspondence between an interface number and a data interface, that is, the first correspondence. In addition, Table 1 shows the interface number, the sleep level, and the time window. In the same byte, a correspondence exists between the interface number, the sleep level, and the time window. Therefore, the second correspondence between an interface number and a sleep level may be determined. For example, if the first correspondence exists between the first data interface and the first interface number, and the second correspondence exists between the first interface number and the first sleep level, a sleep level corresponding to the first data interface is the first sleep level.

It may be learned that, in the foregoing technical solution, the first electronic device may determine a correspondence between each data interface and each sleep level based on the correspondence between an interface number and a data interface and the correspondence between an interface number and a sleep level, to further facilitate the first electronic device in setting the sleep level corresponding to each data interface. In a possible implementation, a quantity of the at least one time window of the electronic device is the same as the quantity of the at least one data interface of the electronic device, and that the electronic device determines, based on the at least one time window of the electronic device, the target time point corresponding to each data interface in the at least one data interface includes: determining a third correspondence between each interface number in the at least one interface number of the electronic device and each data interface of the electronic device; determining a fourth correspondence between each interface number of the electronic device and each time window in the at least one time window of the electronic device; determining, based on the third correspondence of the electronic device and the fourth correspondence of the electronic device, a time window corresponding to each data interface of the electronic device; and determining, based on the time window corresponding to each data interface of the electronic device, the target time point corresponding to each data interface of the electronic device.

Specifically, Table 1 shows the interface number. The first electronic device stores the correspondence between an interface number and a data interface, that is, the third correspondence. In addition, Table 1 shows the interface number, the sleep level, and the time window. In the same byte, correspondences exist between the interface number, the sleep level, and the time window. Therefore, the fourth correspondence between an interface number and a time window may be determined. For example, if the third correspondence exists between the first data interface and the first interface number, and the fourth correspondence exists between the first interface number and the first time window, a time window corresponding to the first data interface is the first time window.

It may be learned that, in the foregoing technical solution, the first electronic device may determine a correspondence between a data interface and a time window based on the correspondence between an interface number and a data interface and the correspondence between an interface number and a time window, and further determine the target time point corresponding to each data interface, to facilitate conversion of each data interface from the sleep state to the wakeup state by the first electronic device.

In a possible implementation, the data information of the electronic device further includes the valid transmission information, and the valid transmission information of the electronic device and the sleep information of the electronic device are in the same data packet.

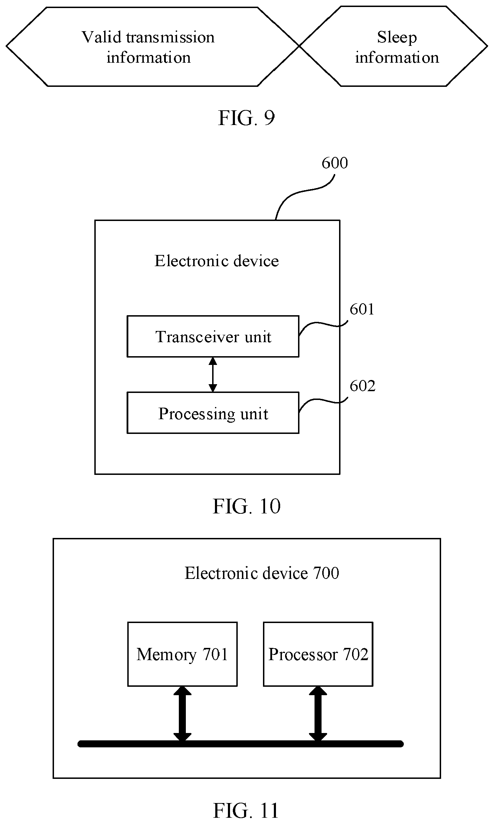

Optionally, FIG. 9 is a schematic diagram of a possible combination of valid transmission information and sleep information according to an embodiment of this application.

It may be learned that, in the foregoing technical solution, the valid transmission information and the sleep information are in the same data packet. In this case, the first electronic device does not need to independently receive the sleep information in a switching process between the sleep state and the wakeup state, thereby improving efficiency of setting the sleep state and the wakeup state by the first electronic device.

An embodiment of this application further provides another data interface sleep and wakeup method. The method is applied to a second electronic device and includes: sending data information to a first electronic device, where the data information includes sleep information, and the sleep information is used by the first electronic device to set at least one data interface to a sleep state, or the sleep information is used by the first electronic device to set at least one data interface to a wakeup state.

The following describes a data transmission system. The system includes a first electronic device and a second electronic device. The electronic device: the second electronic device is configured to send data information to the electronic device: the first electronic device. The data information of the electronic device includes sleep information. The electronic device: the first electronic device is configured to: receive the data information of the electronic device sent by the electronic device: the second electronic device; and set at least one data interface to a sleep state based on the sleep information of the electronic device; or set at least one data interface of the electronic device to a wakeup state based on the sleep information of the electronic device.

It may be learned that, in the foregoing technical solution, the first electronic device may implement sleep and wakeup for the at least one data interface based on the sleep information sent by the second electronic device. In other words, the first electronic device may implement control on states of a plurality of data interfaces based on one piece of sleep information instead of a plurality of pieces of sleep information and/or wakeup information, to avoid redundancy and time consumption caused during control on the data interfaces by using the plurality of pieces of sleep information and/or wakeup information, thereby improving state switching efficiency of the data interfaces. In addition, the foregoing technical solution does not require adjustment on a hardware structure, thereby improving sleep control reliability.

FIG. 10 is a schematic structural diagram of an electronic device according to an embodiment of this application. The electronic device 600 may be applied to the method shown in FIG. 2. As shown in FIG. 10, the electronic device 600 includes a transceiver unit 601 and a processing unit 602.

The transceiver unit 601 is configured to receive data information sent by a second electronic device. The data information includes sleep information.

The processing unit 602 is configured to: set at least one data interface to a sleep state based on the sleep information; or set at least one data interface to a wakeup state based on the sleep information.

In a possible implementation, the sleep information includes a first sleep level, and when the processing unit 602 is configured to set the at least one data interface to the sleep state based on the sleep information, the processing unit 602 is specifically configured to set the sleep state of the at least one data interface based on the first sleep level.

In a possible implementation, the sleep information includes at least one sleep level, and when the processing unit 602 is configured to set the at least one data interface to the sleep state based on the sleep information, the processing unit 602 is specifically configured to: determine, based on the at least one sleep level, a sleep level corresponding to each data interface in the at least one data interface; and set the sleep state of each data interface based on the sleep level corresponding to each data interface.

In a possible implementation, the sleep information further includes a first time window, and when the processing unit 602 is configured to set the at least one data interface to the wakeup state based on the sleep information, the processing unit 602 is specifically configured to: determine a target time point based on the first time window; and set the at least one data interface to the wakeup state at the target time point.

In a possible implementation, the sleep information includes at least one time window, and when the processing unit 602 is configured to set the at least one data interface to the wakeup state based on the sleep information, the processing unit 602 is specifically configured to: determine, based on the at least one time window, a target time point corresponding to each data interface in the at least one data interface; and set each data interface to the wakeup state at the target time point corresponding to each data interface.

In a possible implementation, the sleep information further includes at least one interface number, and before the processing unit 602 is configured to set the at least one data interface to the sleep state based on the sleep information, the processing unit 602 is specifically configured to determine the at least one data interface based on the at least one interface number.

In a possible implementation, a quantity of the at least one sleep level is the same as a quantity of the at least one data interface, and when the processing unit 602 is configured to determine, based on the at least one sleep level, a sleep level corresponding to each data interface in the at least one data interface, the processing unit 602 is specifically configured to: determine a first correspondence between each interface number in the at least one interface number and each data interface; determine a second correspondence between each interface number and each sleep level in the at least one sleep level; and determine, based on the first correspondence and the second correspondence, the sleep level corresponding to each data interface.

In a possible implementation, a quantity of the at least one time window is the same as the quantity of the at least one data interface, and when the processing unit 602 is configured to determine, based on the at least one time window, the target time point corresponding to each data interface in the at least one data interface, the processing unit 602 is specifically configured to: determine a third correspondence between each interface number in the at least one interface number and each data interface; determine a fourth correspondence between each interface number and each time window in the at least one time window; determine, based on the third correspondence and the fourth correspondence, a time window corresponding to each data interface; and determine, based on the time window corresponding to each data interface, the target time point corresponding to each data interface.

In a possible implementation, the data information further includes valid transmission information, and the valid transmission information and the sleep information are in the same data packet.

FIG. 11 is a schematic diagram of a structure of a terminal device according to an embodiment of this application. An electronic device 700 includes a memory 701 and a processor 702. The memory 701 is configured to store a related instruction and data, and may transmit the stored data to the processor 702.

The processor 702 is configured to read the related instruction in the memory 701 to perform the following operation:
receiving data information sent by a second electronic device, where the data information includes sleep information; and
setting at least one data interface to a sleep state based on the sleep information; or
setting at least one data interface to a wakeup state based on the sleep information.

It may be learned that, in the foregoing technical solution, the first electronic device may implement sleep and wakeup for the at least one data interface based on the sleep information sent by the second electronic device. In other words, the first electronic device may implement control on states of a plurality of data interfaces based on one piece of sleep information instead of a plurality of pieces of sleep information and/or wakeup information, to avoid redundancy and time consumption caused during control on the data interfaces by using the plurality of pieces of sleep information and/or wakeup information, thereby improving state switching efficiency of the data interfaces. In addition, the foregoing technical solution does not require adjustment on a hardware structure, thereby improving sleep control reliability.

It should be understood that, the processor mentioned in this embodiment of this application may be a central processing unit (Central Processing Unit, CPU), or another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

The memory 701 stores computer instructions and data. The memory 701 may store computer instructions and data required for implementing the data interface sleep and wakeup method provided in this application. For example, the memory 701 stores the instructions for implementing steps in the data interface sleep and wakeup method. The memory 701 may be any one or any combination of the following storage media: a nonvolatile memory (such as a read-only memory (ROM), a solid-state drive (SSD), a hard disk drive (HDD), or an optical disc) and a volatile memory.

Optionally, the memory may be a physically independent unit, or may be integrated with the processor.

Optionally, when the data interface sleep and wakeup method in the foregoing embodiment is partially or entirely implemented by using software, the electronic device may also include only at least one processor. The memory configured to store the program is located outside an access device, and the processor is connected to the memory by using a circuit/cable, to read and execute the program stored in the memory.

The processor may be a central processing unit (central processing unit, CPU), a network processor (network processor, NP), or a combination of a CPU and an NP.

Optionally, the processor may include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory may include a volatile memory (volatile memory), for example, a random-access memory (random-access memory, RAM). The memory may also include a nonvolatile memory (non-volatile memory), for example, a flash memory (flash memory), a hard disk drive (hard disk drive, HDD), or a solid-state drive (solid-state drive, SSD). The memory may further include a combination of the foregoing types of memories.

An embodiment of this application provides a computer readable storage medium. The computer readable storage medium stores computer instructions. The computer instructions are used to instruct an electronic device to perform the data interface sleep and wakeup method provided in any foregoing implementation.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that sequence numbers of the foregoing processes do not mean execution sequences in the various embodiments of this application. Execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on an actual requirement to achieve the objectives of the solutions of the embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or deleted based on an actual requirement.

The modules in the apparatus according to embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that the person may still make modifications to the technical solutions described in the foregoing embodiments or make equivalent replacements to some technical features thereof, without departing from the scope of the technical solutions of embodiments of this application.

## Claims

1. A data interface sleep and wakeup method, applied to a first electronic device, comprising:
receiving data information sent by a second electronic device, wherein the data information comprises sleep information; and
setting at least one data interface to a sleep state based on the sleep information; or
setting at least one data interface to a wakeup state based on the sleep information.

2. The method according to claim 1, wherein the sleep information comprises a first sleep level, and the setting at least one data interface to a sleep state based on the sleep information comprises:
setting the sleep state of the at least one data interface based on the first sleep level.

3. The method according to claim 1, wherein the sleep information comprises at least one sleep level, and the setting at least one data interface to a sleep state based on the sleep information comprises:
determining, based on the at least one sleep level, a sleep level corresponding to each data interface in the at least one data interface; and
setting a sleep state of each data interface based on the sleep level corresponding to each data interface.

4. The method according to claim 2 or 3, wherein the sleep information further comprises a first time window, and the setting at least one data interface to a wakeup state based on the sleep information comprises:
determining a target time point based on the first time window; and
setting the at least one data interface to the wakeup state at the target time point.

5. The method according to claim 2 or 3, wherein the sleep information comprises at least one time window, and the setting at least one data interface to a wakeup state based on the sleep information comprises:
determining, based on the at least one time window, a target time point corresponding to each data interface in the at least one data interface; and
setting each data interface to the wakeup state at the target time point corresponding to each data interface.

6. The method according to any one of claims 1 to 5, wherein the sleep information further comprises at least one interface number, and before the setting at least one data interface to a sleep state based on the sleep information, the method comprises:
determining the at least one data interface based on the at least one interface number.

7. The method according to claim 6, wherein a quantity of the at least one sleep level is the same as a quantity of the at least one data interface, and the determining, based on the at least one sleep level, a sleep level corresponding to each data interface in the at least one data interface comprises:
determining a first correspondence between each interface number in the at least one interface number and each data interface;
determining a second correspondence between each interface number and each sleep level in the at least one sleep level; and
determining, based on the first correspondence and the second correspondence, the sleep level corresponding to each data interface.

8. The method according to claim 6 or 7, wherein a quantity of the at least one time window is the same as the quantity of the at least one data interface, and the determining, based on the at least one time window, a target time point corresponding to each data interface in the at least one data interface comprises:
determining a third correspondence between each interface number in the at least one interface number and each data interface;
determining a fourth correspondence between each interface number and each time window in the at least one time window;
determining, based on the third correspondence and the fourth correspondence, a time window corresponding to each data interface; and
determining, based on the time window corresponding to each data interface, the target time point corresponding to each data interface.

9. The method according to any one of claims 1 to 8, wherein the data information further comprises valid transmission information, and the valid transmission information and the sleep information are in the same data packet.

10. A data transmission system, wherein the data transmission system comprises a first electronic device and a second electronic device;
the second electronic device is configured to send data information to the first electronic device, wherein the data information comprises sleep information; and
the first electronic device is configured to: receive the data information sent by the second electronic device; and set at least one data interface to a sleep state based on the sleep information; or set at least one data interface to a wakeup state based on the sleep information.

11. The system according to claim 10, wherein the first electronic device is further configured to execute any method in claim 2 to claim 9.

12. An electronic device, comprising:
a transceiver unit, configured to receive data information sent by a second electronic device, wherein the data information comprises sleep information; and
a processing unit, configured to: set at least one data interface to a sleep state based on the sleep information; or set at least one data interface to a wakeup state based on the sleep information.

13. The device according to claim 12, wherein the sleep information comprises a first sleep level, and when the processing unit is configured to set the at least one data interface to the sleep state based on the sleep information,
the processing unit is specifically configured to set the sleep state of the at least one data interface based on the first sleep level.

14. The device according to claim 12, wherein the sleep information comprises at least one sleep level, and when the processing unit is configured to set the at least one data interface to the sleep state based on the sleep information,
the processing unit is specifically configured to: determine, based on the at least one sleep level, a sleep level corresponding to each data interface in the at least one data interface; and set a sleep state of each data interface based on the sleep level corresponding to each data interface.

15. The device according to claim 13 or 14, wherein the sleep information comprises a first time window, and when the processing unit is configured to set the at least one data interface to the wakeup state based on the sleep information,
the processing unit is specifically configured to: determine a target time point based on the first time window; and set the at least one data interface to the wakeup state at the target time point.

16. The device according to claim 13 or 14, wherein the sleep information comprises at least one time window, and when the processing unit is configured to set the at least one data interface to the wakeup state based on the sleep information,
the processing unit is specifically configured to: determine, based on the at least one time window, a target time point corresponding to each data interface in the at least one data interface; and set each data interface to the wakeup state at the target time point corresponding to each data interface.

17. The device according to any one of claims 12 to 16, wherein the sleep information further comprises at least one interface number, and before the processing unit is configured to set the at least one data interface to the sleep state based on the sleep information,
the processing unit is specifically configured to determine the at least one data interface based on the at least one interface number.

18. The device according to claim 17, wherein a quantity of the at least one sleep level is equal to a quantity of the at least one data interface, and when the processing unit is configured to determine, based on the at least one sleep level, the sleep level corresponding to each data interface in the at least one data interface,
the processing unit is specifically configured to: determine a first correspondence between each interface number in the at least one interface number and each data interface; determine a second correspondence between each interface number and each sleep level in the at least one sleep level; and determine, based on the first correspondence and the second correspondence, the sleep level corresponding to each data interface.

19. The device according to claim 17 or 18, wherein a quantity of the at least one time window is the same as the quantity of the at least one data interface, and when the processing unit is configured to determine, based on the at least one time window, the target time point corresponding to each data interface in the at least one data interface,
the processing unit is specifically configured to: determine a third correspondence between each interface number in the at least one interface number and each data interface; determine a fourth correspondence between each interface number and each time window in the at least one time window; determine, based on the third correspondence and the fourth correspondence, a time window corresponding to each data interface; and determine, based on the time window corresponding to each data interface, the target time point corresponding to each data interface.

20. The device according to any one of claims 12 to 19, wherein the data information further comprises valid transmission information, and the valid transmission information and the sleep information are in the same data packet.

21. A data interface sleep and wakeup method, applied to a second electronic device, comprising:
sending data information to a first electronic device, wherein the data information comprises sleep information, and the sleep information is used by the first electronic device to set at least one data interface to a sleep state, or the sleep information is used by the first electronic device to set at least one data interface to a wakeup state.

22. An electronic device, comprising a processor, a memory, and a data interface, wherein the data interface is configured to receive and/or send data information, the memory stores one or more computer programs, and the processor invokes the computer programs stored in the memory to implement the method according to any one of claims 1 to 9.

23. A computer-readable storage medium, wherein the computer-readable storage medium stores a computer program, and when the computer program is run, the method according to any one of claims 1 to 9 is implemented.

24. A computer program product, wherein when the computer program product is executed on a computing device, the method according to any one of claims 1 to 9 is performed.
